(19) Europäisches Patentamt

European Patent Office

Office européen des brevets

(11) EP 0 575 635 B1

## (12) EUROPÄISCHE PATENTSCHRIFT

(45) Veröffentlichungstag und Bekanntmachung des Hinweises auf die Patenterteilung:
**07.01.1998 Patentblatt 1998/02**

(51) Int Cl.$^6$: **G01F 1/72**, F02D 41/18

(21) Anmeldenummer: **92108966.0**

(22) Anmeldetag: **27.05.1992**

(54) **Messung des pulsierenden Luftmassestroms im Ansaugrohr einer Brennkraftmaschine**

Measurement of the pulsating air mass flow in the intake duct of an internal combustion engine

Mesure du débit massique d'air pulsatoire dans la tubulure d'aspiration d'un moteur à combustion interne

(84) Benannte Vertragsstaaten:
**DE FR GB IT**

(43) Veröffentlichungstag der Anmeldung:
**29.12.1993 Patentblatt 1993/52**

(73) Patentinhaber: **SIEMENS AKTIENGESELLSCHAFT**
**80333 München (DE)**

(72) Erfinder:
- **Südholt, Michael, Dipl.-Ing.**
  **D-93107 Thalmassing (Wolkering) (DE)**
- **Wier, Manfred, Dr. Ing.**
  **D-93173 Wenzenbach (DE)**
- **Wildgen, Andreas, Dr.-Ing.**
  **D-93152 Nittendorf (DE)**

(56) Entgegenhaltungen:
**DE-A- 3 344 276**

- **PATENT ABSTRACTS OF JAPAN vol. 5, no. 113 (P-89)13. November 1981 & JP-A-56 107 124 ( HITACHI )**
- **PATENT ABSTRACTS OF JAPAN vol. 6, no. 70 (P-113)6. Mai 1982 & JP-A-57 010 415 ( ISUZU )**

**Beschreibung**

Die vorliegende Erfindung betrifft ein Verfahren zur Ermittlung des der Gemischaufbereitung zugrunde zu legenden Luftwertes bei Pulsationen der Luft im Ansaugrohr einer Brennkraftmaschine.

Zur richtigen Gemischaufbereitung benötigen Kraftstoffzumeßsysteme eine genaue Information über die von der Brennkraftmaschine je Hub angesaugte Luftmasse. Diese Informationen erhalten sie über schnell ansprechende Luftmeßgeräte die beispielsweise nach dem Heißfilmprinzip arbeiten. Durch die hohe Ansprechgeschwindigkeit folgt das Ausgangssignal des Luftmessers jeder Pulsation im Luftstrom.

Auch rückströmende Luftmassen werden - allerdings mit falschem Vorzeichen - erfaßt.

Sobald solche Pulsationen auftreten, liefert daher der Luftmesser keine korrekten Meßwerte mehr, die für die Gemischaufbereitung verwendbar wären.

JP-A-56107124 offenbart ein Verfahren zur Ermittlung von Luftwerten zur Gemischaufbereitung einer Brennkraftmaschine mittels eines Luftmassenmesser. Bei dem Verfahren werden Verfälschungen durch Pulsationen umgangen, indem auf Ersatzwerte umgeschaltet wird, wenn die aus den Pulsationen resultierenden Meßwertschwankungen über einem bestimmten Schwellwert liegen und sich die Brennkraftmaschine im Vollastbetrieb befindet. Die Ersatzwerte werden arithmetisch aus dem verfälschten Meßwert und der Größe der Meßwertschwankungen berechnet.

DE-A-33 44 276 offenbart ein weiteres Verfahren zur Korrektur von Meßwerten des Luftmassenstroms oder einer Basiseinspritzzeit in Abhängigkeit von der Höhe der Pulsation, der Drehzahl und dem Betriebszustand einer Brennkraftmaschine. Die Korrektur erfolgt aber nur, wenn der Öffnungswinkel der Drosselklappe größer ist als ein vorgegebener Winkel, so daß sich die Brennkraftmaschine im Vollastbereich befindet, und die Brennkraftmaschine einen stationären Betriebszustand aufweist.

Aufgabe der vorliegenden Erfindung ist es daher, ein Verfahren anzugeben, mit dem das Auftreten solcher Pulsationen sicher erkannt wird und mit dem es ermöglicht wird, auch beim Auftreten der Pulsationen, das Kraftstoffzumeßsystem mit korrekten Luftwerten zu versorgen.

Mit "Luftwert" wird dabei der Wert des Luftmassenstroms oder die daraus abgeleitete Luftmasse je Hub bezeichnet.

Gelöst wird dies mit einem Verfahren gemäß den Merkmalen des Anspruchs 1.

Vorteilhafte Weiterbildungen ergeben sich aus den Unteransprüchen.

Beim erfindungsgemäßen Verfahren wird anhand des Ausgangssignals des Luftmessers, der sich im Ansaugrohr einer Brennkraftmaschine befindet, das Auftreten von Luftpulsationen erkannt. Dazu wird während des ganzen oder eines Teils des Saughubs eines Zylinders der Brennkraftmaschine der minimale und der maximale Extremwert der vom Luftmesser gelieferten Meßwerte ermittelt. Aus diesen beiden Extremwerten wird ein Differenzwert gebildet, es wird also die Amplitude der Pulsation ermittelt. Überschreitet dieser einen vorgebbaren Schwellwert, dann ist die Pulsation so groß, daß die Meßwerte zur Steuerung der Gemischaufbereitung nicht mehr direkt verwendbar sind. Statt dieser Meßwerte erhält die Gemischaufbereitung Ersatzwerte aus einem Ersatzkennfeld in Abhängigkeit von der Last, insbesondere vom aktuellen Öffnungswinkel der Drosselklappe, von der aktuellen Motordrehzahl und vom Saugrohrdruck.

Um Fehlerkennungen ausschließen zu können, werden erfindungsgemäß noch verschiedene Randbedingungen vorgegeben, die erfüllt sein müssen, damit eine Umschaltung von den Meßwerten auf die Ersatzwerte stattfindet:

a) Instationärbetrieb

Die Pulsationserkennung darf nur durchgeführt werden, wenn sich die Brennkraftmaschine annähernd im Bereich der maximalen Zylinderfüllung befindet. Im instationären Betriebszustand treten durch die Änderungen des Drosselklappenöffnungswinkels beim Beschleunigen oder Verzögern Änderungen der gemessenen Luftwerte auf, die nicht von Pulsationen herrühren. Solche Meßwerte sollen ganz normal in die Gemischaufbereitung eingehen und nicht als fälschlich interpretierte Pulsationen "ausgeblendet" werden.

Zur Erkennung des instationären Betriebszustands wird beim vorliegenden Ausführungsbeispiel der Betrag der Differenz aufeinanderfolgender Meßwerte gebildet. Übersteigt dieser Betrag einen vorgebbaren Wert, so wird ein instationärer Betriebszustand erkannt und eine Umschaltung auf das Ersatzkennfeld findet nicht statt. Zur Erkennung des instationären Betriebszustands sind auch andere Größen verwendbar wie z.B. die Verstellung der Drosselklappe.

b) Drosselklappenwinkel

Bei kleinem Drosselklappenwinkel, d.h. also im Teillast- oder sogar Leerlaufbereich, können ebenfalls, abhängig vom verwendeten Motortyp, Pulsationen auftreten. Sie rühren unter anderem von der Kurbelgehäuseentlüftung her. Ihr Verlauf ist aber derart, daß der aus den Meßwerten gemittelte Luftwert für die Steuerung der Gemischaufbereitung verwendbar ist.

In diesem Bereich soll daher keine Umschaltung auf die Ersatzwerte erfolgen.

Der Schwellwert für das Umschalten von den Meßwerten auf die Ersatzwerte wird höher gewählt als der Schwellwert für die Rückschaltung von den Ersatzwerten auf die Meßwerte.

Diese Hysterese verhindert, daß schon bei kleinen Schwankungen um den Schwellwert ständig hin- und hergeschaltet wird.

Die Erfindung soll im folgenden anhand der Zeichnungen noch näher erläutert werden.

Es zeigen:

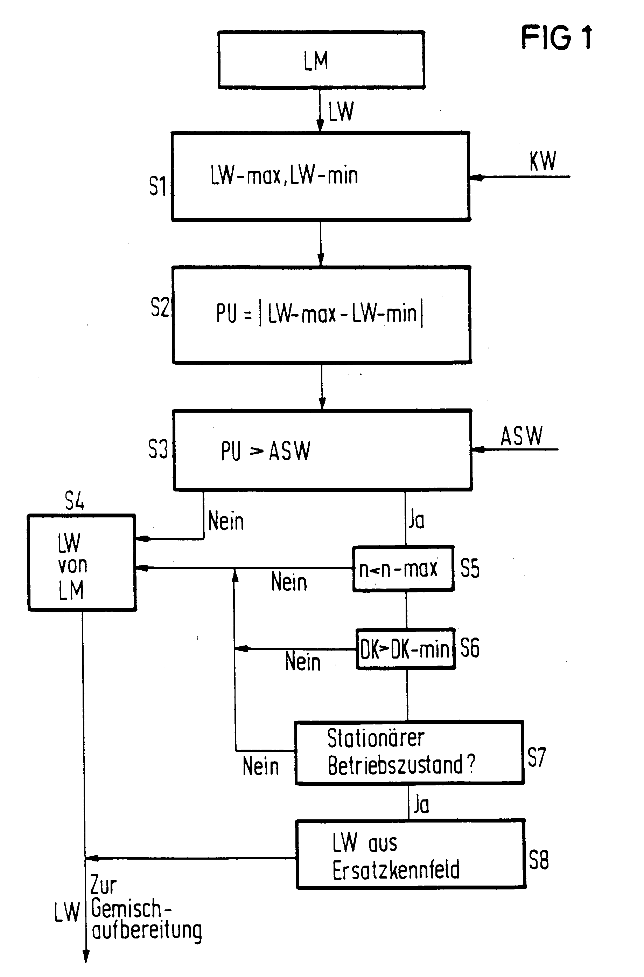

Figur 1     ein schematisches Ablaufdiagramm des erfindungsgemäßen Verfahrens,

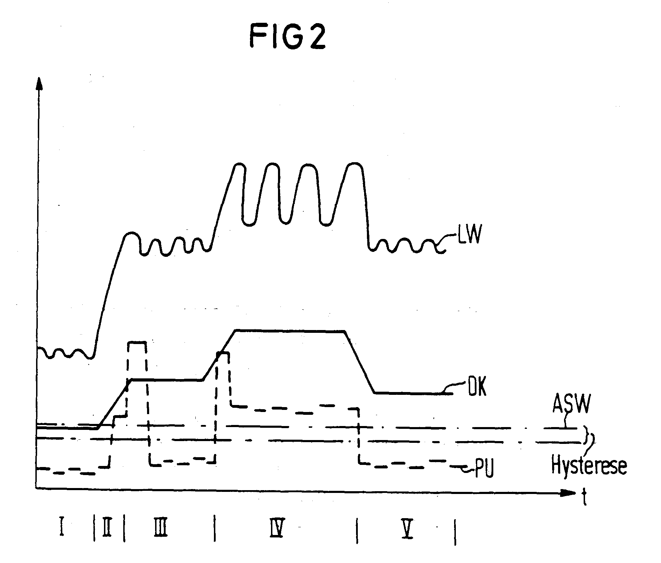

Figur 2     ein Beispiel des zeitlichen Verlaufs der Luftwerte mit den zugehörigen gemessenen bzw. berechneten Größen.

Figur 1:

Der Luftmesser liefert eine Größe, die der Durchflußgeschwindigkeit der Luft entspricht. Unter Berücksichtigung der Dichte der Luft und des Durchflußquerschnitts kann man die während einer bestimmten Zeiteinheit (z.B. während eines Zylinderhubs) am Luftmesser vorbei geflossene Luftmasse bestimmen. Diese Werte sollen im folgenden als Luftwerte LW bezeichnet werden. Aus diesen Meßwerten LW werden im Verfahrensschritt S1 der minimale Extremwert LW_min und der maximale Extremwert LW_max während eines Saughubes eines Zylinders der Brennkraftmaschine ermittelt. Zur zeitlichen Festlegung des Saughubes wird dabei der Kurbelwellenwinkel KW herangezogen.

Im Verfahrensschritt S2 wird daraus ein Differenzwert als Betrag der Differenz der beiden Extremwerte gebildet:

$$PU = |LW\_max - LW\_min|.$$

Im Verfahrensschritt S3 wird dieser Differenzwert PU mit einem vorgebbaren Schwellwert ASW verglichen. Dieser Schwellwert kann eine feste Größe sein oder als Einzelgrößen in Abhängigkeit von z.B. der Drehzahl, der Last oder der Motortemperatur vorgegeben sein.

Ist bei diesem Vergleich der Differenzwert kleiner oder gleich dem Schwellwert, so wird direkt der Meßwert für die Steuerung der Gemischaufbereitung verwendet (S4). Ist der Differenzwert aber größer als der Schwellwert, so wird weiter im Verfahrensschritt S5 geprüft, ob die aktuelle Drehzahl n der Brennkraftmaschine unterhalb einer vorgegebenen Drehzahl n_max liegt. Es konnte durch Messungen festgestellt werden, daß bei hohen Drehzahlen kaum noch Pulsationen auftreten. Es müßte in diesem Bereich ein unnötig hoher Aufwand für eine schnelle Meßwerterfassung und -auswertung betrieben werden. Im Ausführungsbeispiel wird daher in diesem hohen Drehzahlbereich keine Pulsationserkennung durchgeführt. Im Verfahrensschritt S6 wird geprüft, ob die Drosselklappe aktuell einen Wert DK aufweist, der größer als ein vorgebbarer Mindestwert DK_min ist und im Verfahrensschritt S7, ob sich die Brennkraftmaschine in einem annähernd stationären Betriebszustand (maximale Zylinderfüllung) befindet. Wird dies alles verneint, so wird wie oben ebenfalls der Meßwert für die Steuerung der Gemischaufbereitung verwendet (S4). Wird dies aber alles bejaht, so wird im Verfahrensschritt S8 der der aktuellen Last, im Ausführungsbeispiel der der Drehzahl n und dem aktuellen Drosselklappenöffnungswinkel DK entsprechende Ersatzwert aus dem Ersatzkennfeld entnommen und dieser für die Steuerung der Gemischaufbereitung verwendet.

Figur 2:

Die obere durchgezogene Kurve LW stellt den vom Luftmesser gelieferten Luftwert dar, aufgetragen über der Zeit. Sie weist in ihrem ersten Bereich I eine nur geringe Pulsation auf. Der dazugehörige Differenzwert PU - als unterste gestrichelte Kurve dargestellt - weist nur niedrige Werte auf.

Wird nun im Bereich II die Drosselklappe geöffnet - der Öffnungswinkel der Drosselklappe ist als mittlere Kurve dargestellt - entsteht dadurch ein starker Anstieg des Luftwertes; Die LW-Kurve weist einen starken Anstieg mit einem oberen Überschwinger auf. Als Folge davon steigt auch der Wert von PU stark an.

Die Pulsationserkennung wird aber nicht aktiviert, da dieser Bereich als instationärer Betriebsbereich erkannt wird.

Im Bereich III weist der Luftwert LW auf einem höheren Niveau leichte Pulsationen auf, die aber wie im Bereich I ebenfalls so gering sind, daß der errechnete Wert von PU unterhalb der als waagerechte strichpunktierte Linie eingezeichneten Umschaltschwelle ASW liegt.

Im Bereich IV wird die Pulsation größer. PU wird infolge auch größer, und zwar so groß, daß sie über die Umschaltschwelle ASW zu liegen kommt. In diesem Bereich IV wird nun umgeschaltet auf die Ersatzwerte aus dem Ersatzkennfeld.

Im Bereich V wird die Pulsation wieder geringer. PU sinkt in der Folge bis unterhalb der Umschaltschwelle ASW. Es wird wieder zurückgeschaltet von den Luftersatzwerten aus dem Ersatzkennfeld auf die vom Luftmesser gelieferten Meßwerte. Bedingt durch die Hysterese erfolgt die Umschaltung diesmal an der unteren Umschaltschwelle.

**Patentansprüche**

1.    Verfahren zur Ermittlung von Luftwerten, durch die eine Aufbereitung eines Gemischs für eine Brennkraftmaschine bestimmt ist, wobei von einem Luftmassenmesser Meßwerte geliefert werden, die durch einen in einem Ansaugrohr der Brennkraftmaschine pulsierenden Luftstrom bestimmt sind, wobei jeweils während eines Saughubes eines Zylinders der Brennkraftmaschine ein maximaler Extremwert (LW_max) und ein minimaler Extremwerc (LW_min) aus den Meßwerten (LW) ermittelt werden und ein Differenzwert (PU) aus den beiden Extremwerten (LW_max, LW_min) gebildet wird, wobei der Betrag des Differenzwerts (PU) mit einem vorgegebenen Schwellwert (ASW) verglichen wird, und zur Ermittlung von Luftwerten umgeschaltet wird von den Meßwerten auf vorgegebene Ersatzwerte aus einem Ersatzkennfeld , das abhängt von dem Öffnungswinkel (DK) einer Drosselklappe und von einer Motordrehzahl, wenn der Betrag des Differenzwerts (PU) größer ist als der Schwellwert (ASW), wenn der Öffnungswinkel (DK) größer ist als ein vorgegebener Winkel (DK_min) und wenn die Brennkraftmaschine einen stationären Betriebszustand aufweist.

2. Verfahren nach Anspruch 1, dadurch gekennzeichnet, daß der Schwellwert für die Umschaltung auf die Ersatzwerte größer ist als ein Schwellwert für die Rückschaltung von den Ersatzwerten auf die Meßwerte.

3. Verfahren nach Anspruch 1,
   **dadurch gekennzeichnet,** daß
   ein instationärer Betriebszustand der Brennkraftmaschine dann erkannt wird, wenn jeweils der Betrag der Differenz (STEIG) von zwei aufeinander folgenden Meßwerten $(LW_{(n-1)})$, $(LW_{(n)})$ einen vorgegebenen Wert (STEIG_max) überschreitet.

4. Verfahren nach Anspruch 1, dadurch gekennzeichnet, daß nur dann von den Meßwerten auf die Ersatzwerte umgeschaltet wird, wenn die Drehzahl der Brennkraftmaschine einen vorgegebenen Wert unterschreitet.

## Claims

1. Method of determining air values, which determine a mixture formation for an internal combustion engine, measured values being delivered by an air-mass meter, which measured values are determined by an air flow pulsating in an intake pipe of the internal combustion engine, a maximum extreme value (LW_max) and a minimum extreme value (LW_min) being determined from the measured values (LW) in each case during an intake stroke of a cylinder of the internal combustion engine and a differential value (PU) being formed from the two extreme values (LW_max, LW_min), the magnitude of the differential value (PU) being compared with a predetermined threshold value (ASW), and, in order to determine air values, a switchover being made from the measured values to predetermined substitute values from a substitute characteristic map, which depends on the opening angle (DK) of a throttle valve and on an engine speed, if the magnitude of the differential value (PU) is greater than the threshold value (ASW), if the opening angle (DK) is greater than a predetermined angle (DK_min) and if the internal combustion engine is in a steady operating state.

2. Method according to Claim 1, characterized in that the threshold value for switching over to the substitute values is greater than a threshold value for switching back from the substitute values to the measured values.

3. Method according to Claim 1, characterized in that a non-steady operating state of the internal combustion engine is recognized if in each case the magnitude of the difference (rise) between two successive measured values $(LW_{(n-1)})$, $(LW_{(n)})$ exceeds a predetermined value (rise_max).

4. Method according to Claim 1, characterized in that a switchover is made from the measured values to the substitute values only if the speed of the internal combustion engine falls below a predetermined value.

## Revendications

1. Procédé pour la détermination de valeurs d'air grâce auxquelles la préparation d'un mélange pour un moteur à combustion interne est fixée, un appareil de mesure massique de l'air fournissant des valeurs qui sont déterminées par un courant d'air pulsant dans une tubulure d'aspiration du moteur à combustion interne, une valeur extrême maximale (LW_max) et une valeur extrême minimale (LW_min) étant déterminées respectivement pendant une course d'aspiration d'un cylindre du moteur à combustion interne, et une valeur de différence (PU) étant formée à partir des deux valeurs extrêmes (LW_max, LW_min), le montant de la valeur de différence (PU) étant comparé à une valeur de seuil prédéterminée (ASW) et, pour déterminer les valeurs d'air, une commutation étant effectuée des valeurs de mesure à des valeurs de remplacement prédéterminées à partir d'un champ de caractéristique de remplacement, qui dépend de l'angle d'ouverture (DK) d'un papillon et d'une vitesse de rotation du moteur, si le montant de la valeur de la différence (PU) est supérieur à la valeur de seuil (ASW), si l'angle d'ouverture (DK) est supérieur à un angle prédéterminé (DK_min) et si le moteur à combustion interne est dans un état de fonctionnement stationnaire.

2. Procédé selon la revendication 1, caractérisé en ce que la valeur de seuil pour la commutation vers les valeurs de remplacement est supérieure à une valeur de seuil pour le retour des valeurs de remplacement aux valeurs de mesure.

3. Procédé selon la revendication 1, caractérisé en ce qu'un état de fonctionnement non stationnaire du moteur à combustion interne n'est reconnu que si respectivement le montant de la différence (STEIG) de deux valeurs de mesure consécutives $(LW_{(n-1)})$, $(LW_{(n)})$ dépasse une valeur prédéterminée (STEIG_max).

4. Procédé selon la revendication 1, caractérisé en ce que la commutation des valeurs de mesure aux valeurs de remplacement n'a lieu que lorsque la vitesse de rotation du moteur à combustion interne devient inférieure à une valeur prédéterminée.

**FIG 1**

LM

↓ LW

S1 | LW-max, LW-min ←── KW

↓

S2 | PU = | LW-max - LW-min |

↓

S3 | PU > ASW ←── ASW

S4
LW
von
LM

Nein ←──────── Ja

n<n-max | S5

Nein

DK>DK-min | S6

Nein

Stationärer
Betriebszustand?  S7

Nein

Ja

LW aus
Ersatzkennfeld  S8

LW | Zur
Gemischaufbereitung

## FIG 2